(19) Europäisches Patentamt
European Patent Office
Office européen des brevets

(11) **EP 4 478 256 A1**

(12) **EUROPEAN PATENT APPLICATION**

(43) Date of publication:
**18.12.2024 Bulletin 2024/51**

(21) Application number: **23179224.3**

(22) Date of filing: **14.06.2023**

(51) International Patent Classification (IPC):
**G06N 3/0455** (2023.01)   **G06N 3/0475** (2023.01)
**G06N 3/088** (2023.01)   **G06V 10/82** (2022.01)
**G06V 20/70** (2022.01)   *G06N 3/0464* (2023.01)
**G06N 3/094** (2023.01)

(52) Cooperative Patent Classification (CPC):
**G06N 3/0455; G06N 3/0475; G06N 3/096;
G06V 10/82; G06V 20/70;** G06N 3/0464;
G06N 3/094

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventors:
• **Khoreva, Anna
70197 Stuttgart (DE)**
• **Li, Yumeng
72070 Tübingen (DE)**
• **Bini, Massimo
72072 Tübingen (DE)**

Remarks:
Amended claims in accordance with Rule 137(2)
EPC.

(54) **DEVICE AND COMPUTER IMPLEMENTED METHOD FOR MACHINE LEARNING**

(57)    Device and computer implemented method for machine learning, characterized in that the method comprises providing embeddings that are associated with objects, providing a token (206) that represents a part of a digital image (108) that depicts at least a part of an object, wherein the token (206) represents the part with a lower resolution than a resolution of the pixel of the part, selecting with a model (208) an embedding of the embeddings to represent the token in a representation (210) of the digital image (108), determining with the model (108) a reconstruction (212) of the token (206) that represents the object depending on the representation (210) of the digital image (108), and determining a parameter that defines at least one of the embeddings and/or a parameter that defines the model (208) depending on a difference between the token (206) and the reconstruction (212) of the token (206).

Fig. 2

EP 4 478 256 A1

## Description

Background

The invention relates to a device and computer implemented method for machine learning. In machine learning it is desirable to achieve good performances with affordable computational requirements.

Disclosure of the invention

A computer implemented method for machine learning comprises providing embeddings that are associated with objects, providing a token that represents a part of a digital image that depicts at least a part of an object, wherein the token represents the part with a lower resolution than a resolution of the pixel of the part, selecting with a model an embedding of the embeddings to represent the token in a representation of the digital image, determining with the model a reconstruction of the token that represents the object depending on the representation of the digital image, and determining a parameter that defines at least one of the embeddings and/or a parameter that defines the model depending on a difference between the token and the reconstruction of the token. The token represents a quantization of the digital image. The embeddings represent a codebook. The representation of the digital image is a codebook-specific quantization of the digital image. The method trains the embedding, i.e. the codebook and/or the model depending on the quantized digital image. This requires less computing resources, e.g. memory, computing time, computing power, and makes the method executable on a computer with less computing resources.

The method preferably comprises providing a group of embeddings for the object, and selecting with the model the embedding from the group of embeddings. The group represents an object-specific codebook that stores embeddings that are associated with the object.

The method preferably comprises providing groups of embeddings that are associated with objects by a respective label, determining with the model a label for the object depending on pixel of the part of the digital image, selecting the group of embeddings for the object that is associated to the label. This means, the codebook is selected depending on the label.

The method preferably comprises determining the token depending on pixel of the part of the digital image in particular with an encoder. The training may be based on an encoder-decoder structure, wherein the encoder determines features, i.e. the tokens, which the decoder uses for determining the reconstruction of the digital image.

The method preferably comprises determining a reconstruction of the digital image that depicts a reconstruction of the object or a digital image that depicts a reconstruction of the object depending on the reconstruction of the token that represents the object in particular with a decoder. The decoder may determine the reconstruction of the digital image or a new digital image that comprises the object.

The method preferably comprises providing a position for the reconstructed object in the reconstruction of the digital image and determining the reconstructed object at the position in the reconstruction of the digital image or providing a position for the reconstructed object in the digital image that comprises the reconstructed object and determining the reconstructed object at the position in the digital image that comprises the reconstructed object. Providing the position enables a reconstruction of the object at an arbitrary position in the reconstructed digital image or the new digital image.

The method preferably comprises providing an embedding for an object for the reconstruction of the part of the digital image, determining a token that represents the object for the reconstruction of the digital image depending on the embedding, and determining the reconstruction of the digital image depending on the token that represents the object for the reconstruction of the digital image, or providing an embedding for an object for the digital image, determining a token that represents the object for the digital image depending on the embedding, and determining the digital image depending on the token that represents the object for the digital image. Providing the embedding for the object creates a new object in the reconstruction of the digital image or the new digital image.

The method preferably comprises determining a map that associates the embedding that represents the token that is associated with the object with a position of the part of the image or a position of the object in the digital image. The map is a positional information that enables a position specific reconstruction.

The method preferably comprises determining a position of the reconstructed object in the reconstruction of the digital image or the digital image that depicts the reconstructions of the object depending on the map. This means, the reconstruction is position specific.

The method preferably comprises determining a plurality of embeddings to represent tokens that represent a plurality of parts of the digital image, wherein the map associates the embeddings with respective positions in the digital image.

A device for machine learning that comprises at least one processor and at least one memory that is configured to store instructions that are executable by the at least one processor and that, when executed by the at least one processor, cause the device to execute the method, has advantages that correspond to the advantages of the method.

A program that comprises instructions that when executed by a computer, cause the computer to execute the method has advantages that correspond to the advantages of the method.

Further advantageous embodiments are derived from the following description and the drawing. In the drawing:

Fig. 1    schematically depicts a device for machine learning,

Fig. 2    schematically depicts a machine learning system,

Fig. 3    schematically depicts a first example for an encoder,

Fig. 4    schematically depicts a first example for a decoder,

Fig. 5    schematically depicts a second example for the encoder,

Fig. 6    schematically depicts a second example for the decoder,

Fig. 7    schematically depicts an inference,

Fig. 8    schematically depicts a method for machine learning.

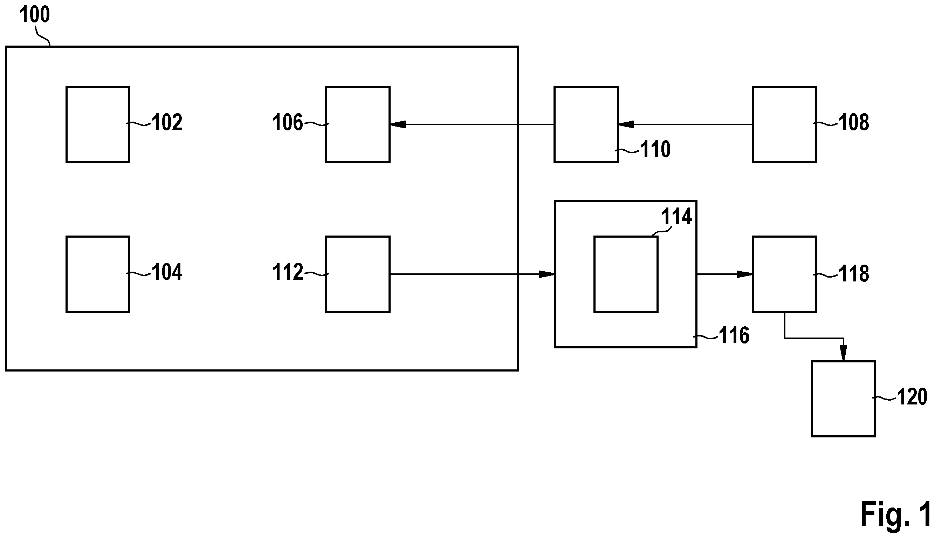

Figure 1 schematically depicts a device 100 for machine learning.

The device 100 comprises at least one processor 102 and at least one memory 104.

The at least one memory 104 is configured to store instructions that are executable by the at least one processor 102.

The instructions, when executed by the at least one processor 102, cause the device 100 to execute the method for machine learning.

A program may comprise the instructions. The device 100 may be a computer.

The device 100 may comprise an input 106 for a digital image 108. The device 100 in the example is connectable to a camera 110 via the input 106. The device 100 may comprise the camera 110 for capturing the digital image 108.

The digital image 108 may be a video, a radar, a LiDAR, an ultrasonic, a motion, or a thermal image.

The device 100 may comprise an output 112 for a reconstructed digital image 114. The device 100 in the example is connectable via the output 112 to a display 116 for displaying the reconstructed digital image 114. The device 100 may comprise the display 116.

The device 100 may comprise a controller 118 for a technical system 120. The technical system 120 may be a physical system in a real world environment. The technical system 120 may be a robot, in particular a vehicle, a manufacturing machine, a power tool an access control system a medical imaging device or a personal assist system. The camera 110 may be configured to capture the digital image 108 depicting a part of the technical system 120 or an environment of the technical system 120. The technical system 120 may be controllable by the controller 118. The controller 118 may be configured to control the technical system 120 depending on the reconstruction 114 of the digital image 108 or on a new digital image that is determined with the device 100.

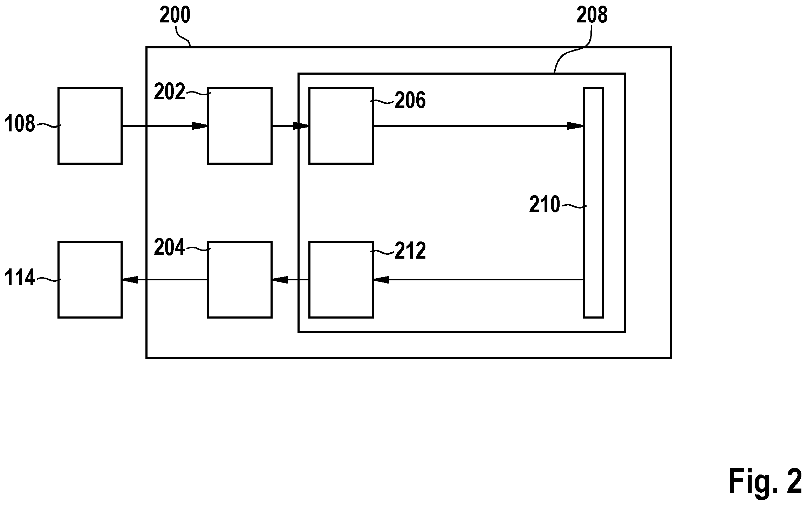

Figure 2 depicts a machine learning system 200.

The machine learning system 200 comprises an encoder 202 and a decoder 204.

The encoder 202 is configured to map the digital image 108 to tokens 206 in a latent space Z that represent parts of the digital image 108. The encoder 202 may be configured to map at least one part of the digital image 108 to a token that is associated with the at least one part.

The machine learning system 200 comprises a model 208. The model 208 is configured to map the tokens 206 to a representation 210 of the digital image 108 in the latent space Z. The model 208 is configured to map the representation 210 of the digital image 108 to reconstructions of the tokens 212. The model 208 may be configured to map a representation of a new digital image that is sampled in the latent space Z to new tokens for the new digital image.

The decoder 204 is configured to map the reconstructions of the tokens 212 from the latent space Z to the reconstructed digital image 114 or to map the new tokens from the latent space Z to the new digital image. The decoder 204 may be configured to map a reconstruction of the token that is associated with the at least one part to the part of the digital image 108.

The encoder 202 and the decoder 204 may be part of a first stage. The first stage may comprise a codebook dictionary of predetermined embeddings in the latent space Z. The codebook dictionary may comprise a codebook that is associated with an object or a label for an object. The codebook dictionary may comprise a codebook for at least one object or at least one label. The codebook dictionary may comprise several codebooks for several objects or several labels. The model 208 may be configured to select for at least one of the tokens 206 an embedding from the codebook and map the embedding to the representation 210 of the digital image 108.

The tokens 206 and the embeddings may be vectors or tensors in the latent space Z.

The machine learning system 200 is for example configured to learn the codebook dictionary by tokenizing the digital image with the encoder 202, i.e. encoding the digital image with the encoder 202 into a finite set of tokens, determining a reconstruction of the digital image with the decoder 204 from the finite set of tokens and determining the codebook dictionary that minimizes the difference between the digital image and the reconstruction of digital image.

The embeddings in the codebooks may be defined by at least one parameter. The machine learning system 200 is for example configured to determine the at least one parameter that minimizes the difference. The machine learning system 200 may be configured to learn the encoder 202 or the decoder 204. The encoder 202 may be defined by at least one parameter. The decoder 204 may be defined by at least one parameter. The machine learning system 200 may be configured to determine the at least one parameter of the encoder 202. The machine learning system 200 may be configured to determine the at least one parameter of the decoder 204.

In an example, the digital image 108 comprises pixel. In an example, the pixel comprise three dimensions for colors, e.g. Red, Green, Blue. The pixel may comprise more or less dimensions for colors, e.g. one dimension for a monochrome image or four dimensions for a coding of Cyan, Magenta, Yellow, and Key, i.e. black.

The digital image 108 has a resolution that is defined by the following dimensions: width, e.g. 256, height, e.g. 256, and the dimensions for color. The width or height is for example provided as a number of pixel. The resolution is e.g. 256x256x3.

The encoder 202 is configured to encode the digital image 108 into tokens 206 in a lower dimensional latent space Z. The latent space Z has for example the following dimensions: 16x16x'embed_dim'. The dimension embed_dim may be a predetermined dimension or a parameter. The machine learning system 200 may be configured to learn the parameter embed_dim.

The tokens 206 are quantized. In the example, each of the tokens 206 is substituted with the nearest embedding from the codebook dictionary. The machine learning system 200 may be configured to determine the nearest embedding for a token with a distance measure, e.g. a cosine distance, in the latent space Z.

The machine learning system 200 may comprise a generative adversarial network, GAN, that comprises a discriminator that is configured to discriminate between the digital image 108 and the reconstruction 114 of the digital image 108. The decoder 204 may decode the tokens 206 with a perceptual loss, a reconstruction loss, and a loss of the GAN. The GAN may comprise at least one parameter. The machine learning system 200 may be configured to train the at least one parameter of the GAN.

The model 208 may be part of a second stage.

The machine learning system 200 may be configured to train the model 208 to determine the reconstructions 212 of the tokens 206 with the learned codebook dictionary, i.e. using the embeddings of the codebook dictionary instead of the tokens 206 for determining the reconstructions 212 of the tokens 206.

The machine learning system 200 may be configured to, at inference time, generate the new digital image by randomly sampling using the model 208. The model 208 may comprise a transformer decoder to map the embeddings of the codebook dictionary that are determined for the tokens 206 of the digital image 108 to the representation 210 of the digital image 108 in the latent space Z.

An input for the model 208 comprises the tokens 206.

The model 208 may be configured to map the tokens 206 to the representation 210 in a diffusion process. The model 208 may be configured to map the representation 210 to the reconstruction of the tokens 212 in a denoising process.

The diffusion process may be a Markov chain to gradually add Gaussian noise q to the input of the model 208:

$$q(z_t|z_{t-1}) = N_1\left(z_t; \sqrt{1-\beta_t}\, z_{t-1}, \beta_t I\right)$$

where $N_1$ is the normal distribution and $\{\beta_t\}_{t=0}^{T}$ are a fixed or learned variance schedule.

The representation 210 of the digital image 108 is for example determined in the latent space Z as:

$$z_t = \sqrt{\alpha_t}\, z_0 + \sqrt{1-\alpha_t}\, \varepsilon, \qquad \varepsilon \sim N(0, I)$$

where $z_0, z_t \in Z$

$$\alpha_t := \prod_{s=1}^{t}(1-\beta_s)$$

The denoising process may be parametrized by a Gaussian distribution:

$$p_\Theta(z_{t-1}, z_t) := N_2\left(z_{t-1}; \mu_\Theta(z_t, t), \sigma_\Theta(z_t, t)\right)$$

where $\mu_\Theta(z_t, t)$ is for example expressed as a linear combination of $z_t$ and predicted noise $\varepsilon_\Theta(z_t, t)$. The predicted noise $\varepsilon_\Theta(z_t, t)$ may be modelled by a convolutional neural network, e.g. a U-Net as described in U-Net: Convolutional Networks for Biomedical Image Segmentation, Olaf Ronneberger, Philipp Fischer, Thomas Brox, arXiv:1505.04597.

The parameters $\Theta$ of the predicted noise $\varepsilon_\Theta(z_t, t)$ may be learned depending on a training objective. The training objective in the example is

$$\min_\Theta E\left[\|\varepsilon - \varepsilon_\Theta(z_t, t)\|^2\right]$$

After the model 208 is trained, a representation $z_T$ may be selected by a user or sampled randomly from the Gaussian distribution $N_2$. A reconstruction of the token $\tilde{z}_0$ for a reconstructed digital image $\tilde{x}_0$ or a new token $\tilde{z}$ for a new digital image $\tilde{x}$ may be determined by sequentially obtaining $z_{t-1}$ given $z_t$ from $t = T$ to $t = 1$.

The method for machine learning may comprise training the machine learning system 200. The method for machine learning may comprise testing, verifying, or validating the machine learning system 200. The method for machine learning may comprise generating training data for training the machine learning system 200. The method for machine learning may comprise generating test data for testing, verifying, or validating the machine learning system 200.

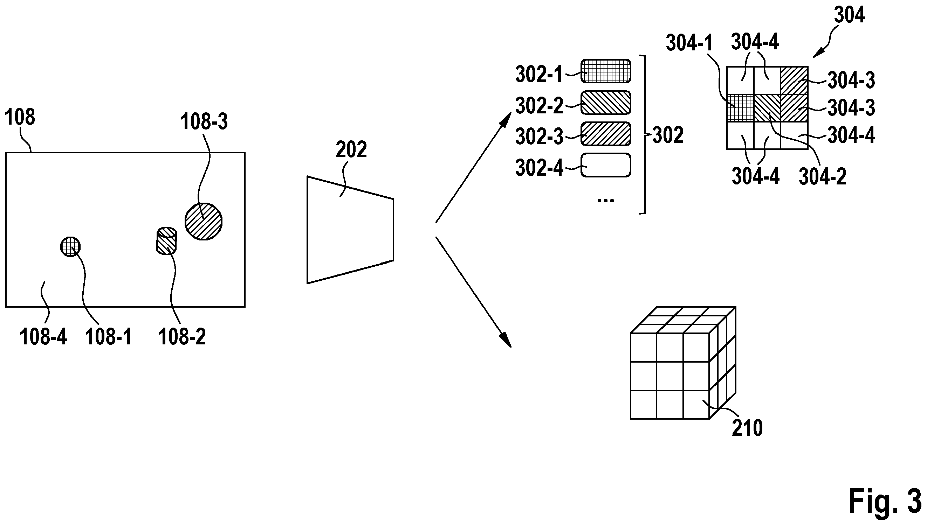

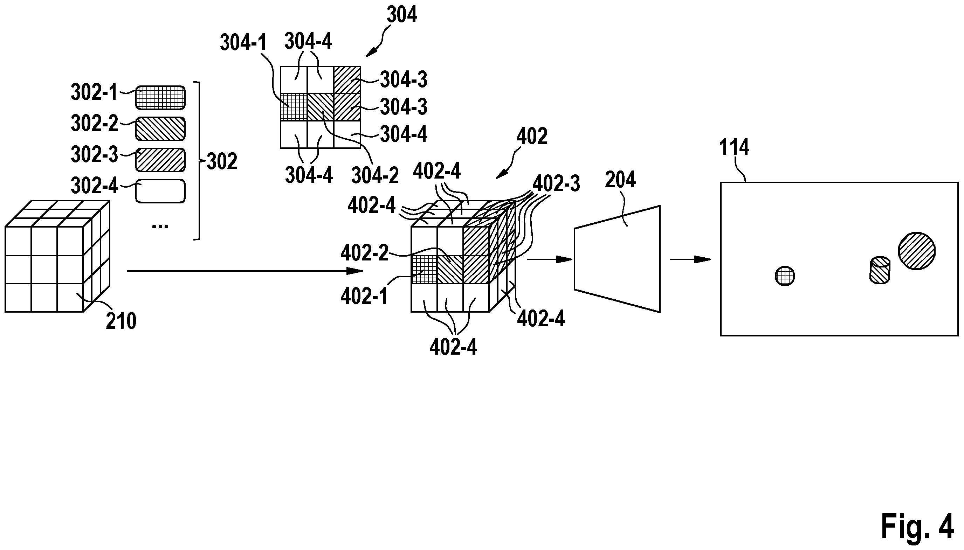

Figure 3 schematically depicts a first example for the encoder 202. Figure 4 schematically depicts a first example for the decoder 204.

The encoder 202 according to the first example is object-aware. The encoder 202 according to the first example is trained to associate parts of the representation 210 of the digital image 108 to learned object representations 302. The encoder 202 according to the first example comprises memory cells. The learned object representations 302 are stored in the example in the memory cells. A class or class label of the objects is unknown or unused according to the first example.

The encoder 202 according to the first example is position-aware. The encoder 202 according to the first example is trained to associate parts of the representation 210 of the digital image 108 to an object position map 304. The object positions in the object position map 304 may be learned. The object positions may be stored in the example in the memory cells.

In the first example, the digital image 108 depicts a first object 108-1, a second object 108-2, a third object 108-3 and background 108-4. In the first example, the object representations 302 comprise a first object representation 302-1 that is associated with the first object 108-1, a second object representation 302-2 that is associated with the second object 108-2, a third object representations 302-3 that is associated with the third object 108-3 and a fourth object representation 302-4 that is associated with the background 108-4. The object representations 302 may comprise object representations for more or less objects.

In the first example, the digital image 108 depicts the first object 108-1 at a first position, the second object 108-2 at a second position, the third object 108-3 at a third position and the background 108-4 at several other positions. In the first example, the object position map 304 comprise a first position representation 304-1 that is associated with the first object 108-1, a second position representation 304-2 that is associated with the second object 108-2, a third position representations 304-3 that is associated with the third object 108-3 and several position representations 304-4 that are associated with the background 108-4. The object representations 302 may comprise position representations for more or less objects.

The encoder 202 according to the first example is trained to pick a vector from the codebook in the codebook dictionary. The encoder 202 according to the first example is trained to pick the vector for a part of the digital image 108 that depicts one of the objects, from the codebook that is associated with this object according to the object position map 304.

The decoder 202 according to the first example is trained to determine the reconstruction 114 of the digital image 108 depending on an object centric representation 402.

In the first example, the object centric representation 402 comprises a first object-centric representation 402-1 that is associated with the first object 108-1 and located at a first spot in the object centric representation 402 that is associated with a first part of the reconstruction 114 of the digital image 108, a second object centric representation 402-2 that is associated with the second object 108-2 and is located at a second spot in the object centric representation 402 that is associated with a second part of the reconstruction 114 of the digital image 108, a third object centric representation 402-3 that is associated with the third object 108-3 and located at a third spot in the object centric representation 402 that is associated with a third part of the reconstruction 114, and a fourth object centric representation 402-4 that is associated with the background 108-4 and located at several spots in the object centric representation 402 that are associated with the a background part of the reconstruction 114 of the digital image 108. The object centric representations 402 may comprise position representations for more or less objects.

The decoder 202 according to the first example is trained to determine the reconstruction of the object in a part of the reconstruction 114 of the digital image 108 from the vector that is determined for this object. The decoder 202 according to the first example is trained to pick the vector for the reconstruction of this part of the reconstruction 114 from the latent space Z that is associated with this object according to the object position map 304.

According to the first example, the machine learning system 200 makes use of object centric representations and corresponding positional information to determine the reconstruction 114 of the digital image 108 in a compositional way.

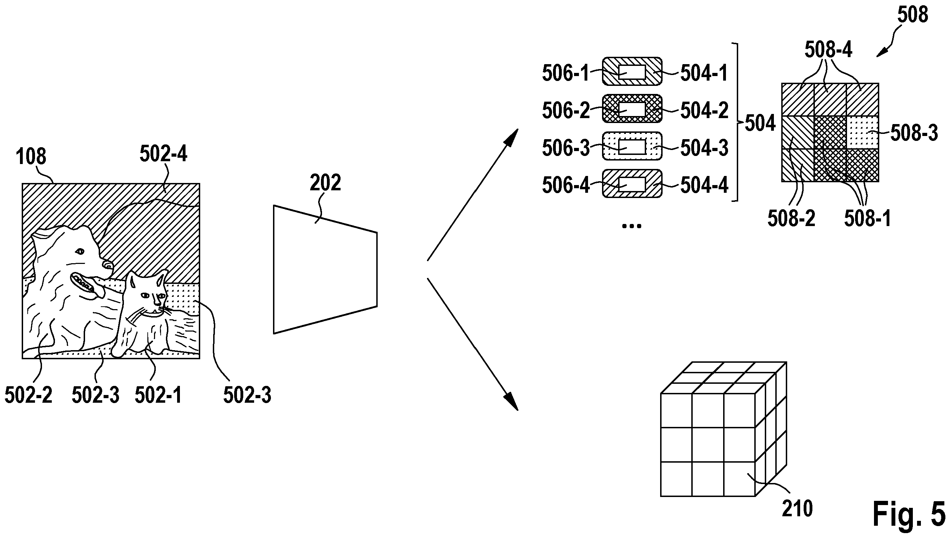

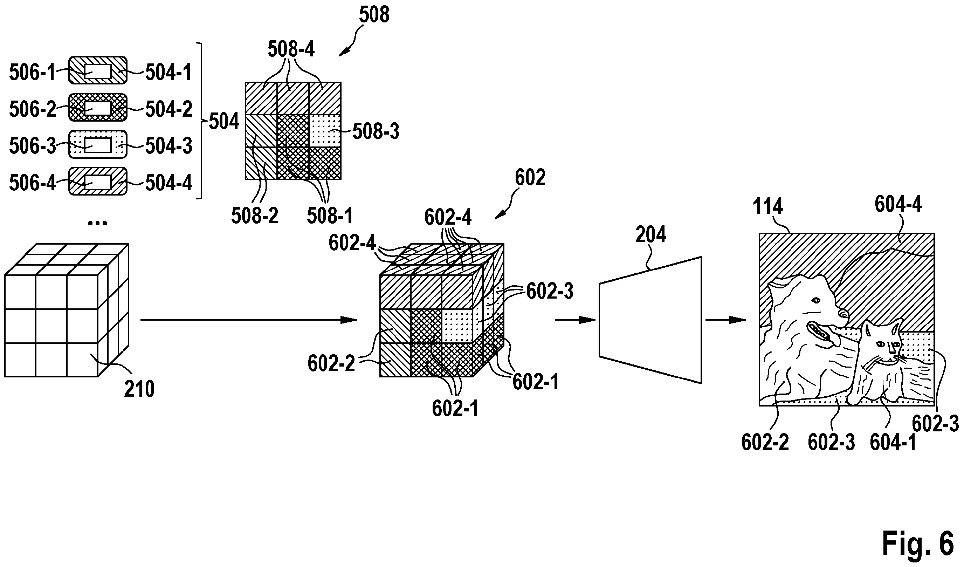

Figure 5 schematically depicts a second example for the encoder 202. Figure 6 schematically depicts a second example for the decoder 204.

The encoder 202 and the decoder 204 according to the second example is object aware and position aware as described for the encoder 202 and the decoder 204 according to the first example. According to the second example, a class or a label for a class of objects is used. The encoder 202 according to the second example may be configured to determine a label for an object that is detected in the digital image 108 depending on the digital image 108. The label may be determined with a classifier that is trained to classify objects. According to the second example, the codebooks in the codebook dictionary are associated with a label that identifies the object that the codebook is associated with. The encoder 202 according to the second example is configured to select the codebook for determining the token 206 for a part of the digital image 108 from the codebook dictionary depending on the label that is assigned to the object that is detected in the part of the digital image 108.

In the example, the digital image 108 comprises a cat 502-1 and a dog 502-2 and grass 502-3 and tree 502-4. The codebook dictionary 504 comprises a first codebook 504-1 associated with a first label 506-1, a second codebook 504-2 associated with a second label 506-2, a third codebook 504-3 associated with a third label 506-3 and a fourth codebook 504-4 associated with a fourth label 506-4. In the example, the first label 506-1 is cat, the second label 506-2 is dog, the third label 506-3 is grass and the fourth label 506-4 is tree. The codebook dictionary 504 may comprise codebooks for more or less labels.

The encoder 202 according to the second example is trained to associate parts of the representation 210 of the digital image 108 to an object position map 508. The object positions in the object position map 508 are learned. The object position map 508 is stored in the example in the memory cells.

In the second example, the digital image 108 depicts the cat 502-1 in a first part of the digital image 108, the dog 502-2 in a second part of the digital image 108, the grass 502-3 at several parts of the digital image 108 and the tree at several parts of the digital image 108. In the second example, the object position map 508 comprise a first position representation 508-1 that is associated with the first label, a second position representation 508-2 that is associated with the second label, several third position representations 508-3 that are associated with the third label and several position representations 508-4 that are associated with the fourth label. The object representations 508 may comprise position representations for more or less objects.

The encoder 202 according to the second example is trained to pick a vector from a codebook in the codebook dictionary. The encoder 202 according to the second example is trained to pick the vector for a part of the digital image 108 that is classified into a class with a label, from the codebook that is associated with this label.

The decoder 202 according to the second example is trained to determine the reconstruction 114 of the digital image 108 depending on an object centric representation 602.

In the second example, the object centric representation 602 comprises a first object-centric representation 602-1 that is associated with the first label and located at a first spot in the object centric representation 602 that is associated with a first part of the reconstruction 114 of the digital image 108, a second object centric representation 602-2 that is associated with the second label and is located at a second spot in the object centric representation 602 that is associated with a second part of the reconstruction 114 of the digital image 108, a third object centric representation 602-3 that is associated with the third label and located at a third spot in the object centric representation 602 that is associated with a third part of the reconstruction 114, and a fourth object centric representation 602-4 that is associated with the fourth label and located at a fourth spot in the object centric representation 602 that is associated with a fourth part of the reconstruction 114 of the digital image 108. The object centric representations 602 may comprise position representations for more or less objects.

The decoder 202 according to the second example is trained to determine the reconstruction of the object in a part of the reconstruction 114 of the digital image 108 from the vector that is determined for this object by the label. The decoder 202 according to the second example is trained to pick the vector for the reconstruction of this part of the reconstruction 114 from the latent space Z that is associated with this object by the label according to the object position map 504.

According to the second example, the decoder 204 is configure to reconstruct the cat in a first part 604-1 of the reconstruction 114, the dog in a second part 604-2 of the reconstruction 114, the grass in a third part 604-3 in the reconstruction 114 and the tree in a fourth part 604-4 in the reconstruction 114.

According to the second example, the machine learning system 200 makes use of object centric representations and corresponding positional information and the label to determine the reconstruction 114 of the digital image 108 in a compositional way.

A concrete instantiation could be introducing the codebook dictionary instead of slots in a slot attention mechanism according to Francesco Locatello, Dirk Weissenborn, Thomas Unterthiner, Aravindh Mahendran, Georg Heigold, Jakob Uszkoreit, Alexey Dosovitskiy, and Thomas Kipf. Object-centric learning with slot attention, 2020.

The machine learning system 200 may be configured to initialize the codebook dictionary instead of the slots, learn to bind the codebooks of the codebook dictionary to particular objects in the digital images, and to process the codebook dictionary according to the slot attention mechanism. This may be done by storing the object representations in per-object codebooks, rather than in slots, and using them to compute the position map as an attention map containing their positional information. The slot attention mechanism may be extended, by storing the codebook dictionary and the representations of the objects in the slots.

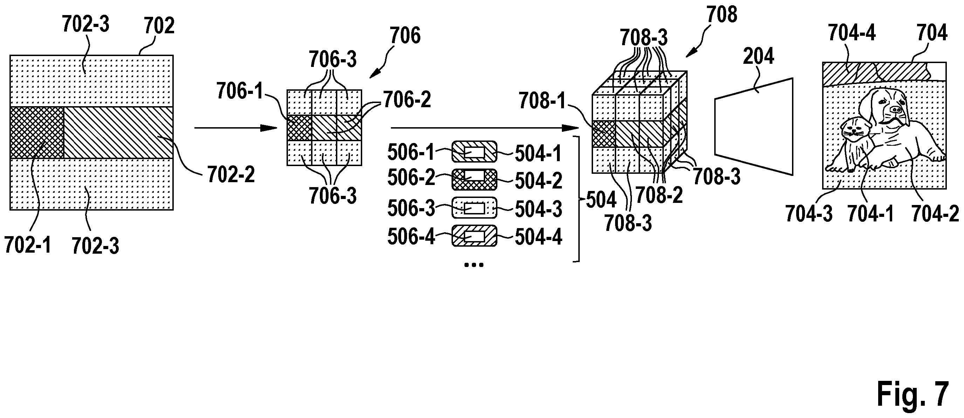

Figure 7 schematically depicts an inference with the decoder 202 according to the second example.

The machine learning system 200 may be configured to provide an object map 702. The machine learning system 200 may be configured to provide a new digital image 704 depending on the object map 702. The object map 702 in the example comprises a first part 702-1 that represents a first part 704-1 of the new digital image 704, a second part 702-2 that represents a second part 704-2 of the new digital image 704, a third part 702-3 that represents a third part 704-3 of the new digital image 704 and a fourth part 702-4 that represents a fourth part 704-4 of the new digital image 704. The object map 702 identifies the object that is represented in the parts of the object map by a respective label. In the example, the first part 702-1 of the object map 702 is associated with the first label, e.g. cat. In the example, the second part 702-2 of the object map 702 is associated with the second label, e.g. dog. In the example, the third part 702-3 and the fourth part 702-4 of the object map 702 is associated with the third label, e.g. grass. The new digital image 704 comprises a cat in the first part 704-1 of the new digital image 704, a dog in the second part 704-2 of the new digital image 704 and grass in the third part 704-3 and in the fourth part 704-4 of the new digital image 704.

The machine learning system 200 may be configured to provide an object position map 706 depending on the object map 702. In the example, the object position map 706 comprises a finite number of parts that corresponds to the finite number of tokens for determining the new digital image 704.

In the example, the object position map 706 comprises 3x3 parts that are labelled according to the label from the object map 702, i.e. a first label 706-1 for the first part 702-1 that identifies the object it shall depict as cat, a second label 706-2 for the second part 702-2 that identifies the object it shall depict as dog and a third label 706-3 that identifies the object it shall depict as grass.

The machine learning system 200 may be configured to sample an object-aware noise map 708 that comprises different vectors in its different parts that are sampled from the codebook of the codebook dictionary 502 that correspond to the label in the object position map 706. The vector for a part that is labelled in the object position map 706 with the first label 706-1 is for example sampled from the first codebook 504-1. The vector for a part that is labelled in the object position map 706 with the second label 706-1 is for example sampled from the second codebook 504-2. The vector for a part that is labelled in the object position map 706 with the third label 706-1 is for example sampled from the third codebook 504-3.

The object-aware noise map 708 in the example comprises a vector 708-1 sampled from the first codebook 504-1 for the first part 704-1 of the new digital image. The object-aware noise map 708 in the example comprises six vectors 708-1 that are sampled from the second codebook 504-2 for the second part 704-2 of the new digital image. In the example, the other vectors 708-3 of the object-aware noise map 708 are sampled from the third codebook 504-3 for the third part 704-3 of the new digital image.

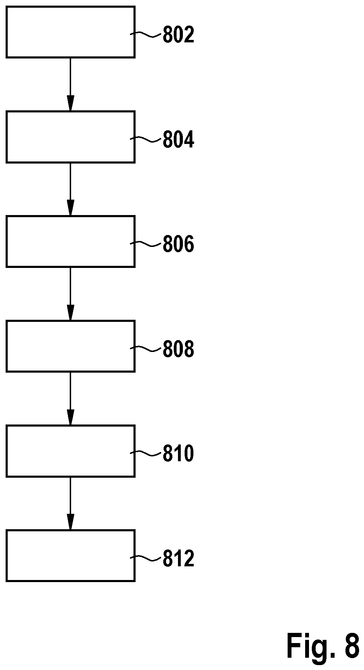

Figure 8 schematically depicts the method for machine learning.

The method comprises a step 802.

In step 802, token 206 are provided.

The token 206 may be determined depending on pixel of the digital image 108s in particular with the encoder 202. Predetermined token 206 may be used as well.

The token 206 each represent a part of the digital image 108 i.e. pixel of the part. The token 206 each may be determined depending on the pixel in the part of the digital image 108 i.e. without using other pixel of the digital image. The token 206 are determined with a lower resolution than a resolution of the pixel of the part they represent.

The method comprises a step 804.

In step 804, embeddings that are associated with objects are provided. In the example, the codebook dictionary is provided.

Step 804 may comprise providing groups of embeddings, e.g. a separate codebook for different objects. The groups may be associated with the object or a respective label identifying the object.

In a training, the method may comprise determining a map that associates an embedding with a position of the part of the image 108 or a position of the object in the digital image 108. In the example, the embedding that represents one of the token 206 is associated with an object and the embedding is associated with the position of the part of the image that depicts the object or the position of the object in the digital image 108. The map is the positional information that enables a position specific reconstruction.

In the training, providing the embeddings may comprise determining a plurality of embeddings to represent tokens 206 that represent a plurality of parts of the digital image 108.

The map associates the embeddings with respective positions in the digital image 108.

The method comprises a step 806.

In step 806, the embeddings for the token 206 are selected with the model 208.

The step 806 may comprise selecting the respective embedding from the group of embeddings that is associated with the object or label.

The token 206 represents the quantization of the digital image 108. The embeddings represent the codebook.

The embeddings are selected from the embeddings in the codebook of the codebook dictionary that is associated with the object that the digital image 108 comprises in the part that the token 206 represents or that has the same label as the part.

The method comprises a step 808.

In the step 808, the reconstruction 212 of the token 206 that represents the object is determined depending on the representation 210 of the digital image 108.

In inference, the step 808 may comprise determining a position for the reconstructed object in the reconstruction 114 of the digital image 108.

In inference, the step 808 may comprise providing a position for the reconstructed object in the digital image 704 that comprises the reconstructed object.

In inference, the step 808 may comprise providing an embedding for an object for the reconstruction of the part of the digital image and determining the token 212 that represents the object for the reconstruction 114 of the digital image 108 depending on the embedding.

In inference, the step 808 may comprise providing an embedding for an object for the digital image 704 and determining the token that represents the object for the digital image depending on the embedding.

The method comprises a step 810.

In the step 810 the method comprises determining the reconstruction 114 of the digital image 108 that depicts a reconstruction of the object in particular with the decoder 204.

In inference, the step 810 may instead comprise determine the digital image 704 that depicts a reconstruction of the object depending on the reconstruction 212 of the token 206 that represents the object. The decoder may determine the reconstruction of the digital image or a new digital image that comprises the object.

In inference, the step 810 may comprise determining the reconstructed object at the position in the reconstruction 114 of the digital image 108.

In inference, the step 810 may comprise determining the reconstructed object at the position in the digital image 704 that comprises the reconstructed object.

The step 810 may comprise determining a position of the reconstructed object in the reconstruction 112 of the digital image 108 or the digital image 704 that depicts the reconstructions of the object depending on the map.

In training, the method may comprise a step 812.

The step 812 comprises determining a parameter that defines at least one of the embeddings and/or a parameter that defines the model 208 depending on a difference between the token 206 and the reconstruction 212 of the token 206.

The steps may be repeated to train with training data comprising digital images 108.

To achieve good performances with affordable computational requirements, Vector Quantized (VQ) model or a Latent Diffusion Model (LDM) may be modified. These models separate the learning process in two stages: (stage 1) compact representations of the images are learned; (stage 2) such representations are used to train a generative model at a lower dimensionality, which saves computational costs and makes the process faster.

A VQ model that is modified according to the description herein may be used to first learn to encode and quantize images via a learnable codebook, and then learn how to compose such codebooks to generate new images. A LDM that is modified according to the description herein may be used to learn how to encode images and learn how to generate images via a diffusion process at such an embedding level.

The first stage of these models may be modified according to the description herein to learn object-centric representations, which can be utilized to condition the generation process at an object level. In this way, the modified models provide more control over the composition of a scene in a generated digital image.

**Claims**

1. Computer implemented method for machine learning, **characterized in that** the method comprises providing (804) embeddings that are associated with objects, providing (802) a token (206) that represents a part of a digital image (108) that depicts at least a part of an object, wherein the token (206) represents the part with a lower resolution than a resolution of the pixel of the part, selecting (806) with a model (208) an embedding of the embeddings to represent the token in a representation (210) of the digital image (108), determining (808) with the model (108) a reconstruction (212) of the token (206) that represents the object depending on the representation (210) of the digital image (108), and determining (812) a parameter that defines at least one of the embeddings and/or a parameter that defines the model (208) depending on a difference between the token (206) and the reconstruction (212) of the token (206).

2. The method according to claim 1, **characterized by** providing (804) a group of embeddings for the object, and selecting (806) with the model (208) the embedding from the group of embeddings.

3. The method according to claim 2, **characterized by** providing (804) groups of embeddings that are associated with objects by a respective label, determining (802) with the model (208) a label for the object depending on pixel of the part of the digital image (108), selecting (806) the group of embeddings for the object that is associated to the label.

4. The method according to one of the previous claims, **characterized by** determining (802) the token depending on pixel of the part of the digital image (108) in particular with an encoder (202).

5. The method according to one of the previous claims, **characterized by** determining (810) a reconstruction (114) of the digital image (108) that depicts a reconstruction of the object or a digital image (704) that depicts a reconstruction of the object depending on the reconstruction of the token that represents the object in particular with a decoder (204).

6. The method according to claim 5, **characterized in that** the method comprises providing (808) a position for the reconstructed object in the reconstruction (114) of the digital image (108) and determining the reconstructed object at the position in the reconstruction (114) of the digital image (108) or providing a position for the reconstructed object in the digital image (704) that comprises the reconstructed object and determining the reconstructed object at the position in the digital image (704) that comprises the reconstructed object.

7. The method according to claim 5, **characterized in that** the method comprises providing (808) an embedding for an object for the reconstruction of the part of the digital image (108), determining a token (212) that represents the object for the reconstruction (114) of the digital image (108) depending on the embedding, and determining the reconstruction (114) of the digital image (108) depending on the token (212) that represents the object for the reconstruction (114) of the digital image (108), or providing (808) an embedding for an object for the digital image (704), determining a token that represents the object for the digital image depending on the embedding, and determining the digital image (704) depending on the token that represents the object for the digital image (704).

8. The method according to one of the claims 5 to 7, **characterized by** determining a map that associates the embedding that represents the token that is associated with the object with a position of the part of the image or a position of the object in the digital image.

9. The method according to claim 8, **characterized by** determining (810) a position of the reconstructed object in the reconstruction (112) of the digital image (108) or the digital image (704) that depicts the reconstructions of the object depending on the map.

10. The method according to one of the claims 8 or 9, **characterized in that** the method comprises determining (804) a plurality of embeddings to represent tokens (206) that represent a plurality of parts of the digital image (108), wherein the map associates the embeddings with respective positions in the digital image (108).

11. Device (100) for machine learning, **characterized in that** the device comprises at least one processor (102) and at least one memory (104) that is configured to store instructions that are executable by the at least one processor (102) and that, when executed by the at least one processor (102), cause the device (100) to execute the method according to one of the claims 1 to 10.

12. Program, **characterized in that** the program comprises instructions that when executed by a computer, cause the computer to execute the method according to one of the claims 1 to 10.

**Amended claims in accordance with Rule 137(2) EPC.**

1. Computer implemented method for machine learning, **characterized in that** the method comprises providing (802) a token (206) that represents a part of a digital image (108), providing (804) embeddings that are associated with objects, wherein the part of the digital image (108) depicts at least a part of an object, wherein the token (206) represents the part of the digital image with a lower resolution than a resolution of the pixels of the part of the digital image, selecting (806) with a model (208) an embedding of the embeddings to represent the token (206) in a representation (210) of the digital image (108), determining (808) with the model (208) a reconstruction (212) of the token (206) that represents the object depending on the representation (210) of the digital image (108), and determining (812) a parameter that defines at least one of the embeddings and/or a parameter that defines the model (208) depending on a difference between the token (206) and the reconstruction (212) of the token (206).

2. The method according to claim 1, **characterized by** providing (804) a group of embeddings for the object, and selecting (806) with the model (208) the embedding from the group of embeddings.

3. The method according to claim 2, **characterized by** providing (804) groups of embeddings that are associated with objects by a respective label, determining (802) with the model (208) a label for the object depending on pixels of the part of the digital image (108), selecting (806) the group of embeddings for the object that is associated to the label.

4. The method according to one of the previous claims, **characterized by** determining (802) the token depending on pixels of the part of the digital image (108) in particular with an encoder (202).

5. The method according to one of the previous claims, **characterized by** determining (810) a reconstruction (114) of the digital image (108) that depicts a reconstruction of the object or a digital image (704) that depicts a reconstruction of the object depending on the reconstruction of the token that represents the object in particular with a decoder (204).

6. The method according to claim 5, **characterized in that** the method comprises providing (808) a position for the reconstructed object in the reconstruction (114) of the digital image (108) and determining the reconstructed object at the position in the reconstruction (114) of the digital image (108) or providing a position for the reconstructed object in the digital image (704) that comprises the reconstructed object and determining the reconstructed object at the position in the digital image (704) that comprises the reconstructed object.

7. The method according to claim 5, **characterized in that** the method comprises providing (808) an embedding for an object for the reconstruction of the part of the digital image (108), determining a token (212) that represents the object for the reconstruction (114) of the digital image (108) depending on the embedding, and determining the reconstruction (114) of the digital image (108) depending on the token (212) that represents the object for the reconstruction (114) of the digital image (108), or providing (808) an embedding for an object for the digital image (704), determining a token that represents the object for the digital image depending on the embedding, and determining the digital image (704) depending on the token that represents the object for the digital image (704).

8. The method according to one of the claims 5 to 7, **characterized by** determining a map that associates the embedding that represents the token that is associated with the object with a position of the part of the image or a position of the object in the digital image.

9. The method according to claim 8, **characterized by** determining (810) a position of the reconstructed object in the reconstruction (112) of the digital image (108) or the digital image (704) that depicts the reconstructions of the object depending on the map.

10. The method according to one of the claims 8 or 9, **characterized in that** the method comprises determining (804) a plurality of embeddings to represent tokens (206) that represent a plurality of parts of the digital image (108), wherein the map associates the embeddings with respective positions in the digital image (108).

11. Device (100) for machine learning, **characterized in that** the device comprises at least one processor (102) and at least one memory (104) that is configured to store instructions that are executable by the at least one processor (102) and that, when executed by the at least one processor (102), cause the device (100) to execute the method according to one of the claims 1 to 10.

12. Program, **characterized in that** the program comprises instructions that when executed by a computer, cause the computer to execute the method according to one of the claims 1 to 10.

Fig. 1

Fig. 2

Fig. 3

EP 4 478 256 A1

Fig. 4

EP 4 478 256 A1

Fig. 5

EP 4 478 256 A1

Fig. 6

Fig. 7

EP 4 478 256 A1

Fig. 8

Europäisches
Patentamt

European
Patent Office

Office européen
des brevets

# EUROPEAN SEARCH REPORT

**Application Number**

EP 23 17 9224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/059699 A1 (GOOGLE LLC [US]) 13 April 2023 (2023-04-13) * paragraph [0008] - paragraph [0021] * * figure 4 * | 1-12 | INV. G06N3/0455 G06N3/0475 G06N3/088 G06V10/82 |
| X | YANG ZUOPENG ET AL: "Modeling Image Composition for Complex Scene Generation", 2022 IEEE/CVF CONFERENCE ON COMPUTER VISION AND PATTERN RECOGNITION (CVPR), IEEE, 18 June 2022 (2022-06-18), pages 7754-7763, XP034195557, DOI: 10.1109/CVPR52688.2022.00761 [retrieved on 2022-09-27] * section 3.1 * | 1-12 | G06V20/70  ADD. G06N3/0464 G06N3/094 |
| A | SARA ATITO ET AL: "SiT: Self-supervised vIsion Transformer", ARXIV.ORG, CORNELL UNIVERSITY LIBRARY, 201 OLIN LIBRARY CORNELL UNIVERSITY ITHACA, NY 14853, 26 December 2022 (2022-12-26), XP091403080, * page 5 section "3.1 Self-Supervised Vision Transformer"; figure 1 * | 1-12 | |

**TECHNICAL FIELDS SEARCHED (IPC)**

G06N

The present search report has been drawn up for all claims

| Place of search | Date of completion of the search | Examiner |
|---|---|---|
| The Hague | 15 November 2023 | Veynachter, Alexis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 9224

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2023

| Patent document cited in search report | Publication date | Patent family member(s) | Publication date |
|---|---|---|---|
| WO 2023059699 A1 | 13-04-2023 | NONE | |

For more details about this annex : see Official Journal of the European Patent Office, No. 12/82